# EUROPEAN PATENT APPLICATION

(11) **EP 2 163 599 A2**
(43) Date of publication of application: **17.03.2010**
(21) Application number: 08169065.3
(22) Date of filing: 13.11.2008
(51) Int. Cl.: C10L 3/10, B01D 53/14, B01D 53/18

(54) **Method and device for methane recovery from biogas with low content of methane**

(30) Priority: 08.09.2008 PL 38604708
(71) Applicant: Politechnika Lubelska, 20-219 Lublin (PL)
(72) Inventor: Pawlowski, Lucjan, 20-027 Lublin (PL); Pawlowska, Malgorzata, 20-027 Lublin (PL); Dadej, Witold, 20-861 Lublin (PL)
(74) Representative: Kaminski, Piotr

(57) **Abstract**

A method and device for methane recovery from biogas with low content of methane is **characterised in that** the waste dump gas is mixed under pressure with a solution of iron (II) sulphate (VI), preferably in concentration of 1% and then the mixture is separated into methane enriched biogas and a solution of iron (II) sulphate (VI) containing precipitated sediment of FeS and CO₂ dissolved in it.

## Description

The present invention relates to a method and device for methane recovery from biogas with low content of methane.

Biogas collected on refuse collection depot contains a mixture of CH₄ and CO₂, in which the methane contents changes from around 70% to more then ten percent. Furthermore, the waste dump gas contains from several to tens of mg of H₂S/m³.

The exploitation of waste dump gas for energy purposes is economically justified when the methane content exceeds 30%. Biogas having favourable parameters, i.e. of methane content of over 30% is produced on the waste dump for 20-30 years. After that a gas mixture containing decreasing amounts of methane is emitted for tens of years. During that time not only energy contained in the emitted methane is lost, but also, what is extremely important, the methane contributes to the greenhouse effect, for its molecules influence the greenhouse effect 20 times more then commonly known carbon dioxide. This is why actions are taken in order to limit the methane emission.

Known are the methods for elimination of waste dump methane based on its oxidation in soil outlay, i.e. in special biofilters.

Chinese patent CN1978866 presents a method involving methanotrophs incubation in biofilter, to which nutrients and methane containing gas are delivered. Methane is oxidised by bacteria to CO₂. This way CH₄ emission is eliminated, but one also looses the methane energy value.

In Japanese patent JP2007275022 a method is presented in which methanotrophic bacteria are incubated in soil, where intensively growing plants are planted covering non-sealed waste dump. Bacteria oxidise methane to carbon dioxide and increased concentration of CO₂ fosters the plants growth, which in turn reduces carbon dioxide emission to the atmosphere. Also in this method the energy value of methane is lost.

Chinese patent CN101053766 describes a multilayer device comprising a lower layer of porous material such as sawdust, envisaged to ensure uniform distribution of gas in entire section, and an upper layer containing soil or other material in which methanotrophic bacteria developed. A mixture of gas with low methane content is mixed with air and forced from down upwards. In this case the energy value of methane is also lost.

The implementation of a rule of balanced development requires economical use of energy.

The essence of the method for methane recovery from biogas with low content of methane is that the waste dump gas is mixed under pressure with a solution of iron (II) sulphate (VI), preferably in concentration of 1% and then the mixture is separated into methane enriched biogas and a solution of iron (II) sulphate (V) containing precipitated sediment of FeS and CO₂ dissolved in it.

The essence of the device for methane recovery from biogas with low content of methane, comprising horizontal agitator, cylindrical vertical cylinder-shaped separating container, decanter and compressor and a pump is that it consists of horizontally positioned cylindrical agitator connected by a duct with vertically positioned separating container equipped in its upper part with a duct for carrying off methane enriched biogas with built in valve of adjustable pressure while lower part is connected by a duct with built in valve of adjustable pressure with decanter, overfall of which is connected with container equipped with devices for correction of composition of iron (II) sulphite (VI) solution. The position of the duct connecting the agitator with separating container is tangent to the level of solution present in the container.

Beneficial effect of the method according to present invention is that it allows for restricting the emission of methane contained in the waste dump gas of the methane content below 30 %. At the same time it allows for energy recovery through removal of carbon dioxide from solution of iron (II) sulphate (VI).

Embodiment of the device according to present invention is presented in the schematic drawing.

Solution of iron (II) sulphate (VI) together with waste dump gas is forced into cylindrical reactor under increased pressure, preferably 5 bar. Subsequently the mixture is transmitted to vertical container, to which it is delivered in the central part, tangent to the surface of the solution, where waste dump gas enriched with methane is separated and accumulates in the upper part of the container. Carbon dioxide and hydrogen sulphide pass to the solution located in the lower part of the container.

Enriched waste dump gas is collected from upper part of the vertical container, while solution is directed to a decanter, in which carbon dioxide is released and where FeS sediment settles in the bottom. After clarification the solution is re-circulated for subsequent use.

Invention will be further described as based on the drawing.

The principle of operation of the device according to present invention is as follows: waste dump gas is transmitted by a duct 1 to a compressor 2 and it is further forced to cylindrical agitator 3, to which a solution of iron (II) sulphate (VI) from container 4 is forced under pressure by means of a pump 5. A mixture of waste dump gas and solution of iron (II) sulphate (VI) is forced through a duct 6 into the cylindrical vertical container 7, tangent to the level 8 of the solution. Waste dump gas enriched with methane accumulates in the upper part of the container 7 from where it is carried off through duct 13 with built in pressure regulating valve. Carbon dioxide and hydrogen sulphide pass to the solution contained in the lower part of the container 7. Next the solution is directed through a duct 9 with built in pressure regulating valve to a decanter 10, in which CO₂ separates and sediment settles and accumulates in the conical part of decanter, from where it is periodically removed through a port 11 with built in drain valve. Clarified solution is carried off to the container 4 for subsequent use after correction of FeSO₄ concentration.

### Example:

Waste dump gas containing 22 % of methane, 78% of carbon dioxide and 80 mg H₂S/m³ was mixed under 5 bar pressure with 1% iron (II) sulphate (VI) solution in the ratio of 1 m³ of gas per 450 dm³ of solution. After separation in the separating column biogas void of H₂S was obtained and it contained 83% of methane and 17% of CO₂. From 1m³ of waste dump gas 2,3 g of hydrated FeS was obtained.

## Claims

1. A method for methane recovery from biogas with low content of methane **characterised in that** the waste dump gas is mixed under pressure with a solution of iron (II) sulphate (VI), preferably in concentration of 1% and then the mixture is separated into methane enriched biogas and a solution of iron (II) sulphate (VI) containing precipitated sediment of FeS and CO₂ dissolved in it.

2. A device for methane recovery from biogas with low content of methane, comprising horizontal agitator, cylindrical vertical cylinder-shaped separating container, decanter, compressor and a pump, **characterised in that** it consists of horizontally positioned cylindrical agitator (3) connected by a duct (6) with vertically positioned separating container (7) equipped in its upper part with a duct (13) for carrying off methane enriched biogas with built in valve of adjustable pressure, while lower part is connected by a duct (9) with built in valve of adjustable pressure with decanter (10), overfall of which is connected with container (4) equipped with devices for correction of composition of iron (II) sulphite (VI) solution.

3. A device according to claim 2, **characterised in that** position of the duct (6) connecting agitator (3) with container (7) is tangent to the level (8) of solution present in the separating container (7).
